# EUROPEAN PATENT APPLICATION

(11) **EP 4 799 779 A1**
(43) Date of publication of application: **02.09.2026**
(21) Application number: 25290009.7
(22) Date of filing: 26.02.2025
(51) Int. Cl.: B28B 1/00, B33Y 10/00, C04B 28/04

(54) **METHOD FOR THE MANUFACTURE OF A CEMENTITIOUS ASSEMBLY AND BONDING AGENT THEREFOR**

(71) Applicant: Holcim Technology Ltd., 6300 Zug (CH)
(72) Inventor: DUCHAND, Sylvain, 38070 Saint Quentin Fallavier (FR); SANDRA, Fabien, 38070 Saint Quentin Fallavier (FR); BOULANOUAR, Youcef, 38070 Saint Quentin Fallavier (FR); HALIN, Olivier, 38070 Saint Quentin Fallavier (FR)
(74) Representative: Regimbeau

(57) **Abstract**

The invention refers to a method of manufacturing a cementitious assembly, the cementitious assembly having a layered structure wherein at least two layers of a hydraulic composition are bonded with a mineral bonding agent, the method comprising the following steps:
i) placing a first layer of a hydraulic composition onto a substrate;
ii) applying a mineral bonding agent onto the first layer of the hydraulic composition;
iii) placing another layer of the hydraulic composition onto the mineral bonding agent;
iv) allowing the at least two layers of the hydraulic composition and the mineral bonding agent to set and harden to obtain the cementitious assembly,

wherein the steps ii) and iii) can be repeated several times prior to execution of step iv), and wherein the hydraulic composition comprises 15 to 50 m-% binder, in mass percentages of the hydraulic composition, and wherein the mineral bonding agent comprises, in mass percentages of the mineral bonding agent:
Portland cement
35-75 m-%, preferred 45-60 m-%;
fine mineral filler
2-35 m-%, preferred 5-30 m-%;
sand
1-15 m-%, preferred 5-10 m-%;
water reducer
0.1-5 m-%, preferred 0.25-2 m-%;

and water, and further to the use of the mineral bonding agent, a cementitious assembly and the use of the cementitious assembly.

## Description

The invention relates to a method for the manufacture of a cementitious assembly using a mineral bonding agent. Further, the invention relates to the use of the mineral bonding agent, to a cementitious assembly produced according to the method and to the use of the cementitious assembly.

In particular, the invention relates to a method for additive manufacturing, e.g. 3D printing, of hydraulic compositions (applicable to both mono-component printing compositions, i.e. mortar or concrete compositions that can be printed directly and, bi-component printing compositions that require mixing the mortar or concrete with another component e.g. yielding agent in the printer head in order to be printable). The invention further relates to a method for improving the adhesion bond between two layers of a hydraulic composition e.g., a cured layer and a fresh layer, in order to prevent the formation of cold joints.

The formation of cold joints (delamination) is a well-known phenomenon in 3D printing that occurs when the first layer of a hydraulic composition sets before the next layer is placed. This usually occurs when printing is resumed on a previously printed layer after several hours, i.e. when the production window between the deposition of the first layer and the second layer exceeds several hours. So-called "cold joint" issues are often observed when printing operation is resumed after a day or two.

Cold joints lead to a deterioration of the adhesion between the fresh layer of the hydraulic composition and the previously deposited layer of the hydraulic composition. This decrease in adhesion will result in the creation of weak spots, which can lead to structural defects such as cracks, causing at least design defects or even structural collapse.

Solutions known from prior art suggest a chemical pre-treatment of the hardened layer of the hydraulic composition prior to resuming printing operations. Such chemical treatment includes, for example, the application of epoxy mortars such as Sikadur, which is used herein as a comparative example.

The disadvantages of epoxy mortars are that they are bi-component products, thus requiring proper mixing prior to application. Furthermore, they need to be applied manually, rendering the procedure labor intensive. Epoxy mortars are also expensive.

From "Method of enhancing interlayer bond strength in construction scale 3D printing with mortar by effective bond area amplification", Taylor Marchment, Jay Sanjyan, Ming Xia, Materials & Design, Vol. 169, 5. May 2019, 107684 it is known that 3D Construction Printing (3DCP) is an emerging technology set to revolutionize construction.

Still being in its early stages of development, 3DCP faces several challenges. Particularly in the field of extrusion 3DCP with hydraulic compositions, weak interface bonding is a major problem.

The layered fabrication of a stiff cementitious assembly usually creates a localized void structure as the time between subsequent deposition steps causes the hydraulic composition to set and harden, which in turn leads to insufficient intermixing and thus to a decreasing strength of the interface bond.

Marchment et al. (2019) aimed for a method to enhance the interface bonding by applying a cementitious paste at the interface to minimize voids and increase the area available for bonding. By this method an increase in bond strength is achieved that is proportional to the effective bond area.

To enhance the interface bonding between the 3D printed cementitious layers, Marchment et al. (2019) used four OPC-based paste mixtures as a bonding agent between the 3D printed cementitious layers. All paste mixtures had a water to binder ratio of 0.36. The paste mixtures were developed to primarily increase the effective bond area, with a more malleable interface compared to conventional layer-by-layer construction. Three admixtures including a retarder, viscosity-modifying agent and slump-retention agent were used, which were purchased from BASF Australia.

The object of the invention is to provide a method for 3D printing of layered cementitious assemblies which is a more cost-effective and easy-to-use solution to prevent the occurrence of cold joints in a printing process.

This is achieved by the features of claim 1.

Advantageous features are claimed in the depending sub-claims.

Another object of the invention is to provide a cementitious assembly, manufactured by the method according to the invention.

This is achieved by claim 14.

According to the invention, a new method for preventing cold joints is provided wherein the method comprises the application of a mineral bonding agent.

Unlike epoxy mortars, the mineral bonding agent according to the invention can be applied using a standard 3D printing robot, i.e., in additive manufacturing processes.

The mineral bonding agent according to the invention is also superior to ultra-high-performance concrete (UHPC), which could also be used to enhance the interface bonding of two adjacent layers of a hydraulic composition, since standard UHPC is, unlike the mineral bonding agent according to the invention, not suitable for additive manufacturing as it does not have the required rheological properties before it sets.

Compared to UHPC (cement quantity usually below 40%), the mineral bonding agent according to the invention contains larger amounts of cement. Furthermore, the water-to-cement ratio in the mineral bonding agent is from 0.20 to 0.35 while it is typically below 0.24 in UHPC. Also, the mineral bonding agent contains less sand than UHPC (usually more than 50%). Within the mineral bonding agent, the sand is only used to obtain a better mixing during manufacture of the mineral bonding agent. The amounts of water reducer, i.e. superplasticizer or plasticizer, in the mineral bonding agent are lower than in a UHPC.

To be applicable in 3D printing of layers of a hydraulic composition, the mineral bonding agent needs to exhibit the right rheology, i.e. it needs to be viscous as too liquid materials will overflow over the printed layer of the hydraulic composition and flow along the structure. On the other hand, it must not have a too high yield stress as it must be sufficiently fluid to conform to all the surface imperfections and "micro cracks" of the underlying layer of the hydraulic composition and have maximum contact with the underlying layer.

For 3D printing, the mineral bonding agent must be pumped through the robot head. If its yield stress is too high, pumping/application of the mineral bonding agent becomes difficult. If the viscosity is too high, application of the mineral bonding agent is also difficult, especially at high application speeds. If the yield stress is too high, the contact with the underlying layer will not be optimal and the bonding between the layers will be insufficient.

In contrast to UPHC, the mineral bonding agent according to the invention fulfills the rheology criteria for 3D printing. When fresh, i.e. before setting occurs, it has a yield stress between 20 (very fluid) and 2000 Pa (very viscous).

For 3D printing of the mineral bonding agent, a single-pipe pumping system connected to the printer head or a twin-pipe pumping system with two pumps connected to the printer head, comprising a primary and a secondary pump, can be considered.

The mineral bonding agent can be applied quickly and easily, for example by using the same pump as being used for the application of the hydraulic composition, or using a separate pump not being used for application of the hydraulic composition. When using the same pump, it may be required to clean it beforehand. Using a secondary pump has the advantage that the cleaning step is not necessary. It might be necessary to change the nozzle when switching from the mineral bonding agent to the hydraulic composition used in the construction.

The present invention provides a cost-effective and user-friendly method to produce cementitious assemblies with a layered structure, while avoiding the formation of cold joints. The mineral bonding agent according to the invention, unlike epoxy mortars, is easy to handle and, unlike epoxy mortars and UHPC, can be applied easily using additive manufacturing (3D printing). It is even possible to use the same printing equipment to apply the mineral bonding agent and to deposit the hydraulic composition, without need for excessive cleaning. This enables significant cost and time savings. Switching from the mineral bonding agent to "printing ink" (a hydraulic composition) can be done instantly while printing.

The invention also solves the problem resulting from the formation of cold joints. Due to the outstanding adhesion of the mineral bonding agent according to the invention, longer time intervals between the printing of adjacent layers of a hydraulic composition are possible. The use of the mineral bonding agent to improve adhesion between adjacent layers of the hydraulic composition leads to a nearly monolithic appearance of the resulting cementitious assembly.

Although the invention is advantageous for avoiding cold joints in 3D printing of a hydraulic composition, the invention is not limited to additive manufacturing but can be applied to any cementitious assembly having a layered structure, wherein at least two layers of a hydraulic composition are bonded with a mineral bonding agent according to the invention.

Manual application of the mineral bonding agent is not necessary but is possible. Its application is generally not limited to 3D printing. The mineral bonding agent can be applied in any possible way. For example, it can be applied manually using a spatula, a brush, a paintbrush or the like. Further, the bonding agent can be applied by spraying, using a manual or automatic spray/nozzle system.

It was surprisingly found that the solution according to the invention improves the interlayer bonding in an outstanding way compared to known solutions. This leads to an overall increased strength of the layered cementitious assembly and in turn the structure to be built.

The invention thus refers to a method of manufacturing a cementitious assembly, the cementitious assembly having a layered structure wherein at least two layers of a hydraulic composition are bonded with a mineral bonding agent, the method comprising the following steps:
i) placing a first layer of a hydraulic composition onto a substrate;
ii) applying a mineral bonding agent onto the first layer of the hydraulic composition;
iii) placing another layer of the hydraulic composition onto the mineral bonding agent;
iv) allowing the at least two layers of the hydraulic composition and the mineral bonding agent to set and harden to obtain the cementitious assembly,
wherein the steps ii) and iii) can be repeated several times prior to execution of step iv), and wherein the hydraulic composition comprises 15 to 50 m-% binder, in mass percentages of the hydraulic composition, and wherein the mineral bonding agent comprises, in mass percentages of the mineral bonding agent:

| | | |
|---|---|---|
| Portland cement | 35-75 m-%, | preferred 45-60 m-%; |
| fine mineral filler | 2-35 m-%, | preferred 5-30 m-%; |
| sand | 1-15 m-%, | preferred 5-10 m-%; |
| water reducer | 0.1-5 m-%, | preferred 0.25-2 m-%; |

and water.

In a preferred embodiment, the steps i), ii) and iii) are performed by additive manufacturing, preferably by extruding the layers of the hydraulic composition and the mineral bonding agent using a printer head.

In a preferred embodiment, the same printer head is used to extrude the hydraulic composition and the mineral bonding agent without the need to clean the printer head, thus allowing for continuation of the printing process without the need to adjust the printing equipment.

In a preferred embodiment, the steps i), ii) and iii) are performed by manual application using a hand spatula, a brush, a paintbrush a spray nozzle or the like or by automatic spraying.

The hydraulic composition comprises 15 to 50 m-% binder, in mass percentages of the hydraulic composition.

In a preferred embodiment, the hydraulic composition is concrete or mortar.

The term "concrete" as used herein refers to a mix of binders, of aggregates, of water.

The term "mortar" as used herein refers to a mix of binder, sand, and water.

The hydraulic composition may further comprise admixtures as defined in EN 934-2 of July 2001.

The term "binder" as used herein refers to a pulverulent material which, when mixed with water, forms a paste which sets and hardens by a series of hydration reactions and processes and which, after hardening, retains its strength and its stability even under water.

The term "Portland cement" as used herein refers to a binder comprising at least 80%, preferentially 90% Portland clinker in mass of the Portland cement. The Portland cement used in the mineral bonding agent according to the invention does not comprise a fine mineral filler.

In a preferred embodiment, the Portland cement in the mineral bonding agent comprises 80 to 95 m-%, preferably 90 to 95 m-% Portland clinker, in mass percentages of the Portland cement.

In a preferred embodiment, the source of Portland clinker in the Portland cement is CEM I, CEM II, CEM III, CEM V, CEM VI as defined in the standard NF-EN-197-1 of April 2012 or in NF EN 197-5 published in May 2021.

In a preferred embodiment, the Portland cement in the mineral bonding agent further comprises at least one supplementary cementitious material selected from the group of blast furnace slag, natural or calcinated pozzolans, calcined clay, silica fume or any other additive having pozzolanic properties as defined in the standard NF-EN-197-1 of April 2012.

In a preferred embodiment, the fine mineral filler is a material containing at least calcium carbonate, preferentially added as limestone, recycled concrete or a combination thereof, wherein the mineral filler is preferably limestone having a particle size D50 of 1 to 20 µm, preferably 1 to 10 µm, more preferably 2 to 5 µm, measured by laser diffraction.

The term "D50" as used herein refers to the median or 50^{th} centile of the volume distribution of the total particles, i.e. 50% of the volume consists of particles for which the size is less than D50 and 50% with a size greater than D50.

The recycled concrete used herein is defined in the EN 197-6 standard of June 2023.

In a preferred embodiment, the sand is calcareous sand, silico-calcareous sand or fine silica sand with a particle size ranging from 0.1 to 1 mm, preferably from 0.1 to 8.0 mm, even more preferably from 0.1 to 0.6 mm, measured by sieving.

The sand used herein has a particle size ranging from 0.1 to 0.6 mm, determined by the dry sieve method according to the European NF EN 933-1 standard of May 2012.

In a preferred embodiment, the water reducer used in the mineral bonding agent is a plasticizer or a superplasticizer.

In a preferred embodiment, the water reducer is a superplasticizer based on modified phosphonates.

In a preferred embodiment, the superplasticizer based on modified phosphonates is replaced or used in combination with other types of plasticizers or superplasticizers based on polycarboxylate ethers, polynaphthalene sulfonates, polymelamine sulfonates and/or vinyl copolymers.

For example, lignosulfonates, sodium and salts of gluconic acid might be used as plasticizers In the mineral bonding agent.

In a preferred embodiment, the mineral bonding agent further comprises admixtures as specified in EN 934-2 of July 2001.

These admixtures comprise workability extenders, retarders, setting accelerators, thickeners, viscosity modifying agents, wetting/dispersing agents, mass water repellents, latex, shrinkage reducing agents and defoaming agents.

Workability extenders include, for example, polycarboxylate ether with hydrolysable functions.

Retarders are, for example, lignosulfonates, gluconates, carbohydrates (glucose, sucrose, etc.), carboxylic acids, and phosphates.

Setting accelerators are, for example, composed of inorganic salts of calcium or sodium, such as calcium nitrate (Ca(NO₃)₂), sodium nitrate (NaNO₃) and calcium chloride (CaO₂) and calcium formate. Aluminum salts might also be used.

Thickeners or viscosity modifying agents are, for example, cellulose ethers and derivatives, starch ethers and derivatives, polyacrylamides and derivatives, natural high-molecular-weight gums (xanthane, diutan, etc.) and days (bentonite, attapulgite, sepiolite).

Wetting/dispersing agents are, for example, polymeric substances, based on polyesters and polyethers, with polar and apolar groups, such as acids, alcohols, amines and phosphoric esters.

Mass water repellents are, for example, fatty acid salts, and particularly the salts of stearic acid.

Latex can be added in aqueous dispersion or as a powder. Dispersions polymers are based on vinyl acetate, ethylene and other monomers, such as vinyl acetate-ethylene. The polymers might also be based on styrene butadiene, styrene acrylic, or polymers based on acrylic or modified acrylic.

Shrinkage reducing agents are, for example, hexylene glycols and glycol derivatives.

Defoaming agents are, for example, silicone antifoam, polyether antifoam, mineral oil antifoam or fatty alcohol antifoam.

In another embodiment, the mineral bonding agent comprises fibers or micro-fibers.

Fibers or micro-fibers are, for example, made of organic substances, such as polyethylene, polypropylene, polyvinyl alcohol, copolymer acrylonitrile or vinyl acetate, and cellulose or minerals, such as glass or basalt.

In a preferred embodiment, the water to powder ratio is 0.12 to 0.18 and the water to Portland cement ratio is 0.20 to 0.40 within the mineral bonding agent, expressed as a mass ratio.

The term "water to powder ratio" as used herein refers to the ratio of water to the sum of Portland cement, fine mineral filler and sand.

In a preferred embodiment, the mineral bonding agent is applied in a thickness of 2 to 6 mm and/or the application rate is 6.6 to 11.1 kg/m².

The invention further refers to a use of the mineral bonding agent according to the invention for bonding of at least two layers of a hydraulic composition.

The invention further refers to a cementitious assembly manufactured according to the method according to the invention.

The invention further refers to a use of the cementitious assembly according to the invention as a construction element that forms part of a building structure.

The subject of the invention is described in more detail with reference to the subsequent figures and examples, without intending to restrict the said subject to the special embodiments.

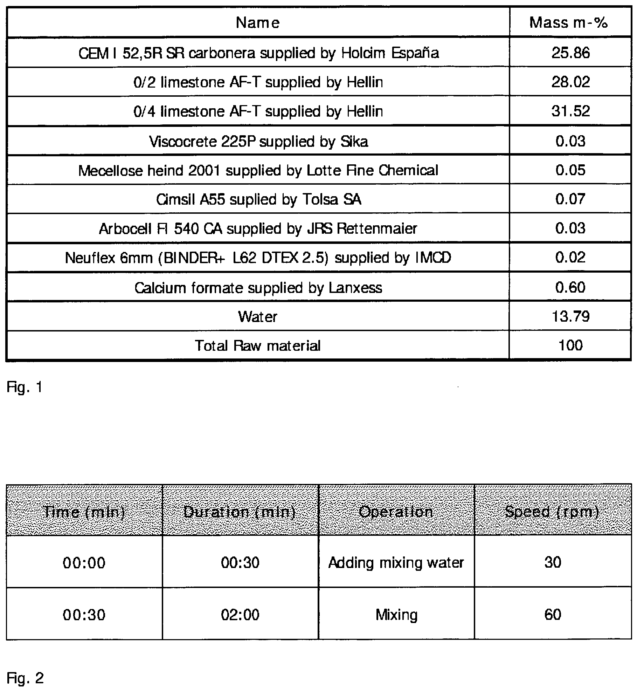

- Figure 1:: the composition of a 3D printing mortar (hydraulic composition);
- Rgure 2:: the preparation time and speed of mixing;
- Rgure 3:: a comb for preparing the surface;
- Rgure 4:: a test specimen with the prepared surface;
- Figure 5:: a composition of the mineral bonding agent according to the invention;
- Figure 6:: a mixing protocol;
- Rgure 7:: viscosity values of the mineral bonding agent according to the invention;
- Rgure 8:: yield stress values of the mineral bonding agent according to the invention;
- Rgure 9:: a splitting test setup;
- Rgure 10:: splitting force results for different types of products;
- Rgure 11:: a chart of comparative materials;
- Rgure 12:: the effect of the nature of the surface in combination with mineral bonding agent according to the invention;

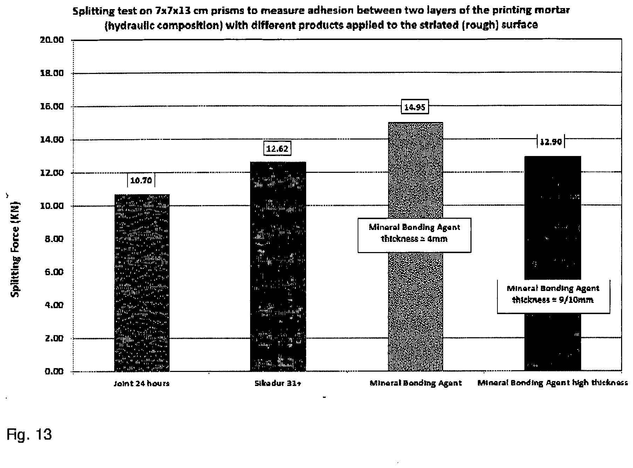

- Figure 13:: the effect of the thickness of the layer of the mineral bonding agent on adhesion.

The invention is explained by way of an example and respective comparative examples.

The composition of the hydraulic composition (a mortar in the present examples) for 3D printing used herein is shown in Rgure 1.

The hydraulic composition is made using a Rayneri planetary mixer PH 602 EV. The volume of the hydraulic composition produced is adjusted according to the number of test pieces to be cast.

The mortar is made with a water/cement ratio of 0.160. The mixing protocol can be seen in Rgure 2.

After mixing, the hydraulic composition is spread evenly on the bottom of the prismatic metal mold of 7×7×28 cm (height×width×length) up to a little more than half of the height of the molds. For each product tested, 3 prismatic test pieces 7×7×28 cm are cast. For the splitting test, 6 prismatic test pieces 7×7× 13 cm are cast.

The hydraulic composition is put in place by pricking with a metal spatula (50 prickings per test piece). Using the spatula and treating the surface in such a way, creates a rough surface with the striped pattern that is representative of a layer of a hydraulic composition printed on an industrial scale using industrially available nozzles.

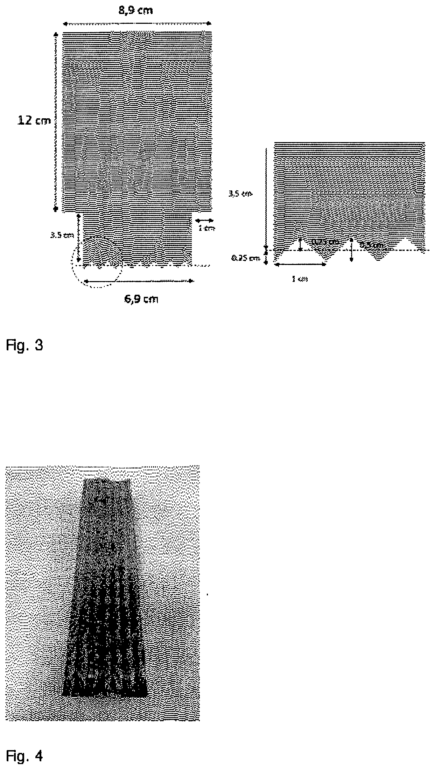

The surface of the layer of the hydraulic composition is then treated with a comb as shown in Figure 3 to create a layer of the hydraulic composition with a rough pattern.

Three passes are necessary to remove excess material of the hydraulic composition and obtain a "striated" surface on the layer of the hydraulic composition (Rgure 4).

In another embodiment, the surface layer of the hydraulic composition remains untreated (un-striated).

There are two embodiments, a layer of the hydraulic composition with an un-striated surface and one with a striated surface.

The molds are left to set at 20°C and 65% RH for 24 hours (uncovered).

After 24 hours, fresh mineral bonding agent according to the invention and epoxy mortar (reference, Sikadur 31 +) are applied on the surface of the hardened layer of the hydraulic composition with a spatula according to the desired thickness.

Sikadur epoxy mortar is made according to the protocol described in the technical sheet. Mixing ratio: Comp A/Comp B: 2/1 by weight.

The mineral bonding agent according to the invention is prepared as follows:
The cement, the filler, the limestone and the sand, are mixed in a mixer for one minute at 140 rpm, meeting the specifications of EN 196-1 standard of May 2005.

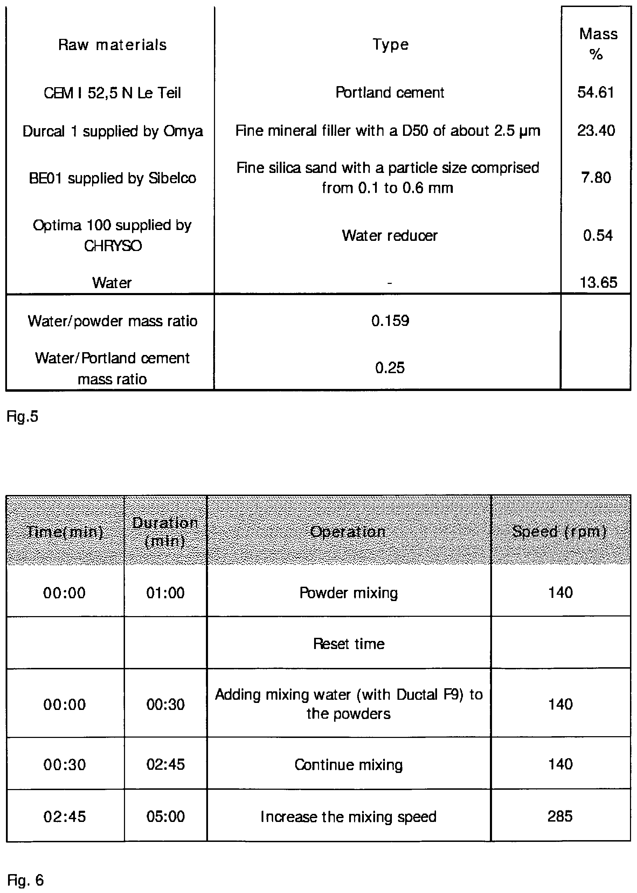

The composition of the mineral bonding agent is set out in Figure 5.

The Ductal F9 fluidizer is mixed with the water in a beaker according to the mixing protocol shown in Figure 6.

To characterize the rheological properties of the mineral bonding agent, the yield stress and the viscosity were determined.

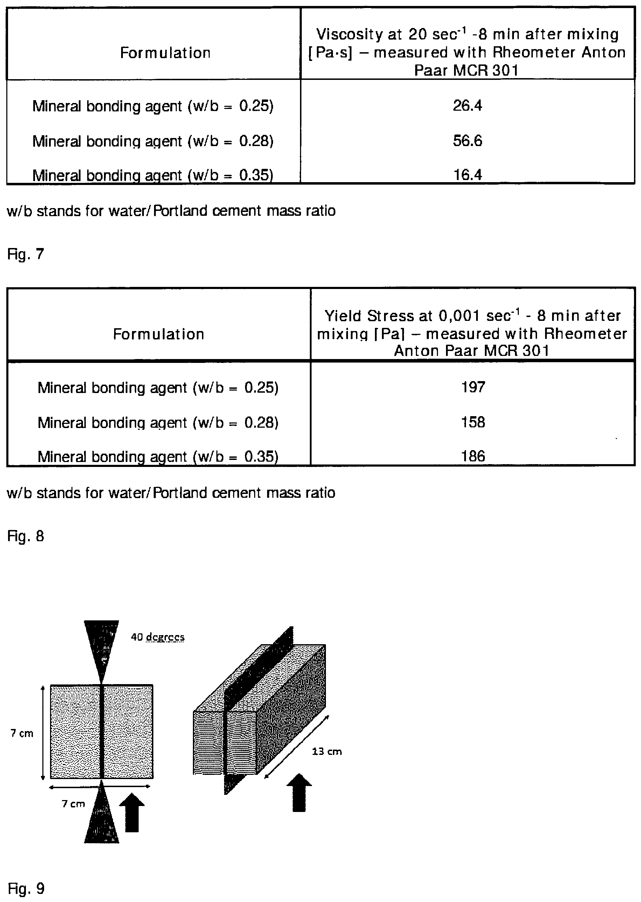

The viscosity values were measured with an ANTON PAAR MCR301 rheometer and with a single pitch helical propeller. The viscosity value was noted at a shear rate of 20 sec⁻¹, corresponding to the application of the product at a thickness of 5 mm at a speed of 10 cm/s with, for example, a spatula. The resulting viscosity values are shown in Figure 7.

Low yield stress values were measured with the ANTON PAAR MCR301 rheometer with a single pitch helical plate. The shear value was taken at 0.001 sec⁻¹ shear rate.

For the high yield stress values, a Pilcon hand vane tester was used, manufactured by Rig and Supply Limited (Nottingham, England). The values are measured with 33 mm Vane for 0-28 kPa. The resulting yield stress values are shown in Figure 8.

The value of the yield stress of the mineral bonding agent according to the invention can vary between 20 (very fluid mineral bonding agent) and 2000 Pa (very viscous mineral bonding agent).

A new layer of the hydraulic composition is produced as described above 5 minutes (open time) after application of the mineral bonding layer or the epoxy mortar reference.

The hydraulic composition is spread evenly on the surface of the epoxy mortar or the mineral bonding agent according to the invention. A slight excess must be deposited to slightly exceed the height of the mold. The hydraulic composition is put in place by pricking with a metal spatula (50 prickings per test piece). The surface of the molds is then leveled with a concrete leveling rule (twice in the same direction).

The cementitious assembly is left for 24 hours at 20°C and 65% HR (molds not covered).

After 24 hours, the cementitious assemblies are unrolled and stored for 7 days at 20°C and 65% RH.

Between 3 and 7 days (before the splitting test) each cementitious assembly is cut in order to obtain prismatic specimens of 7×7× 13 cm (height×width×length).

The splitting test is carried out as follows.
7 days after demolding, the prismatic specimens are tested in splitting.

The principle of the test includes mechanical splitting, separating the two layers and measuring the force required to do so.

The prismatic test pieces are placed in the splitting tool such that the cold joint is in the middle. The two beveled support pieces must press on the cold joint or on the adhesion layer between the two layers of the hydraulic composition.

The speed test is 0.86 kN/s.

The maximum force value (kN) is recorded when failure between two layers occurs.

The test is not standardized. It is carried out with a Zwick Roell hydraulic press with a 300 kN load cell.

The test set up can be seen In schematic view In Figure 9.

The splitting tests, performed according to the above-described protocol, allow for determination of the efficacy of the treatment on the interface bonding strength.

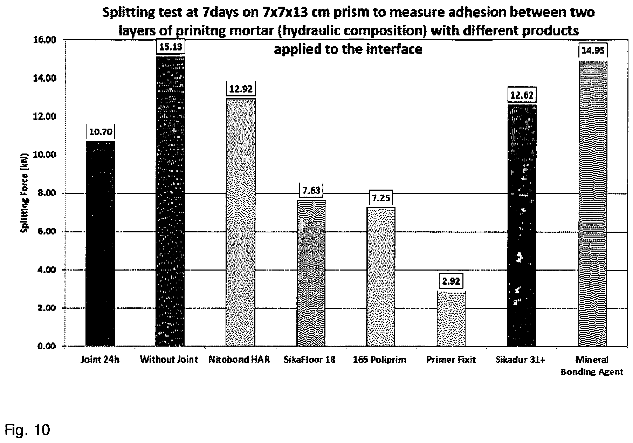

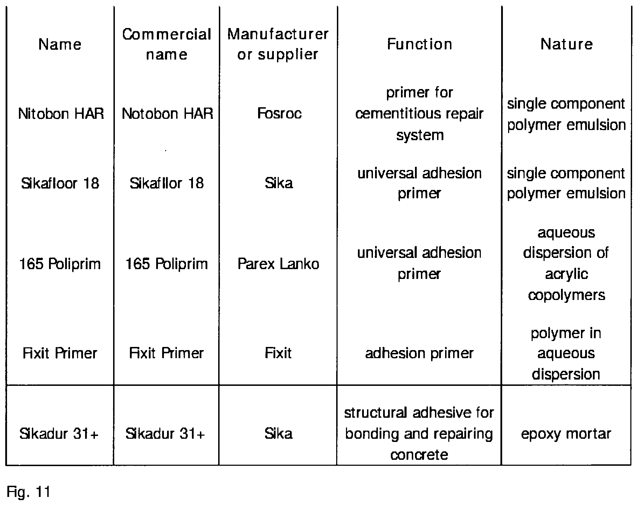

In Figure 10, the splitting force results for different types of products are shown. Comparative examples are listed in Figure 11.

It can be seen that the mineral bonding agent according to the invention performs better than all other tested materials. The resulting cementitious assembly is close to a monolithic printed material with no joints at all. This is surprising and remarkable.

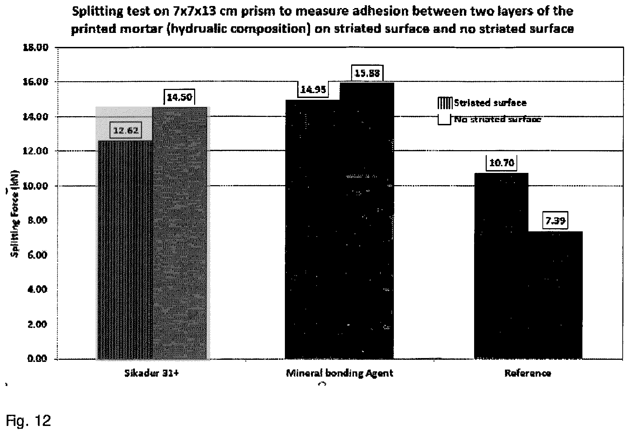

In a further test, the effect of the nature of the surface layer of the hydraulic composition in combination with the mineral bonding agent was determined. The result is shown in Figure 12. Again, the mineral bonding agent according to the invention performs best. The results show that the mineral bonding agent develops its effect independently of the nature of the surface. In contrast to the reference sample, where a rough surface leads to increased strength, the nature of the surface appears to have less influence on the interface bonding strength.

In another test, the effect of the thickness of the layer of a mineral bonding agent according to the invention on adhesion was evaluated. The results can be seen in Figure 13.

It can be observed that a small application quantity with a layer thickness of 4 mm is sufficient to positively influence the adhesion between the layers of the hydraulic composition while increasing the layer thickness has a rather detrimental effect. However, even when being applied in a larger quantity, the mineral bonding agent according to the invention performs better than known agents.

The inventors initially expected the combination of a rough surface layer of the hydraulic composition with the mineral bonding agent to yield the best results. Since this turned out to be not the case, the solution works equally well regardless of the roughness of the surface.

Surprisingly, a mineral bonding agent with the composition according to the invention can be used to enhance the interface bonding between two adjacent layers of the hydraulic compositions to prevent cold joints. The resulting cementitious assembly performs almost as if the joint does not exist. Therefore, the method provided by the invention is not only cheaper, easier to handle and more environmentally friendly than other products but also performs better than state-of-the-art approaches.

The use of the mineral bonding agent to improve adhesion between adjacent layers of the hydraulic composition leads to a nearly monolithic appearance of the resulting cementitious assembly.

Although being advantageous in avoiding cold joints in 3D printing of hydraulic compositions, the invention is not limited to additive manufacturing but can be applied to every cementitious assembly having a layered structure, wherein at least two layers of hydraulic compositions are bonded with a mineral bonding agent according to the invention.

As the application is in general not limited to 3D printing, the application of the mineral bonding agent is also not limited to being printed.

For the application of the mineral bonding agent, every possible way of application may be considered. It can, for example, be applied by manual application using a hand spatula, a brush, a paintbrush or the like. Further, the bonding agent can be applied by spraying, using a manual or automatic spray/nozzle system.

## Claims

1. Method of manufacturing a cementitious assembly, the cementitious assembly having a layered structure wherein at least two layers of a hydraulic composition are bonded with a mineral bonding agent, the method comprising the following steps:
i) placing a first layer of a hydraulic composition onto a substrate;
ii) applying a mineral bonding agent onto the first layer of the hydraulic composition;
iii) placing another layer of the hydraulic composition onto the mineral bonding agent;
iv) allowing the at least two layers of the hydraulic composition and the mineral bonding agent to set and harden to obtain the cementitious assembly,
wherein the steps ii) and iii) can be repeated several times prior to execution of step iv), and
wherein the hydraulic composition comprises 15 to 50 m-% binder, in mass percentages of the hydraulic composition, and
wherein the mineral bonding agent comprises, In mass percentages of the mineral bonding agent:
| | | |
|---|---|---|
| Portland cement | 35-75 m-%, | preferred 45-60 m-%; |
| fine mineral filler | 2-35 m-%, | preferred 5-30 m-%; |
| sand | 1-15 m-%, | preferred 5-10 m-%; |
| water reducer | 0.1-5 m-%, | preferred 0.25-2 m-%; |
and water.

2. Method according to claim 1, wherein the steps i), ii) and iii) are performed by additive manufacturing, preferably by extruding the layers of the hydraulic composition and the mineral bonding agent using a printer head.

3. Method according to claim 1, wherein the steps i), ii) and iii) are performed by manual application using a hand spatula, a brush, a paintbrush a spray nozzle or the like or by automatic spraying.

4. Method according to any of the preceding claims, wherein the Portland cement in the mineral bonding agent comprises 80 to 95 m-%, preferably 90 to 95 m-% Portland clinker, in mass percentages of the Portland cement.

5. Method according to claim 4, wherein the Portland cement in the mineral bonding agent further comprises at least one supplementary cementitious material selected from the group of blast furnace slag, natural or calcinated pozzolans, calcined clay, silica fume or any other additive having pozzolanic properties as defined in the standard NF-EN-197-1 of April 2012.

6. Method according to any of the preceding claims, wherein the fine mineral filler is a material containing at least calcium carbonate, preferentially added as limestone, recycled concrete or a combination thereof, wherein the mineral filler is preferably limestone having a particle size D50 of 1 to 20 µm, preferably 1 to 10 µm, more preferably 2 to 5 µm, measured by laser diffraction.

7. Method according to any of the preceding claims, wherein the sand is calcareous sand, silico-calcareous sand or fine silica sand with a particle size ranging from 0.1 to 1 mm, preferably from 0.1 to 8.0 mm, even more preferably from 0.1 to 0.6 mm, measured by sieving.

8. Method according to any of the preceding claims, wherein the water reducer is a superplasticizer based on modified phosphonates.

9. Method according to claim 8, wherein the superplasticizer based on modified phosphonates is replaced or used in combination with other types of plasticizers or superplasticizers based on polycarboxylate ethers, polynaphthalene sulfonates, polymelamine sulfonates and/or vinyl copolymers.

10. Method according to any of the preceding claims, wherein the mineral bonding agent further comprises admixtures as specified in EN 934-2 of July 2001.

11. Method according to any of the preceding claims, wherein the water to powder ratio is 0.12 to 0.18 and the water to Portland cement ratio is 0.20 to 0.40 within the mineral bonding agent, expressed as a mass ratio.

12. Method according to any of the preceding claims, wherein the mineral bonding agent is applied in a thickness of 2 to 6 mm and/or the application rate is 6.6 to 11.1 kg/m².

13. Use of the mineral bonding agent according to any of the preceding claims for bonding of at least two layers of a hydraulic composition.

14. Cementitious assembly manufactured according to the method according to one of the claims 1 to 12.

15. Use of the cementitious assembly according to claim 14 as a construction element that forms part of a building structure.
